**Europäisches Patentamt**

**European Patent Office**

**Office européen des brevets**

(11) Veröffentlichungsnummer: **0 279 224**
**B1**

(12) # EUROPÄISCHE PATENTSCHRIFT

(45) Veröffentlichungstag der Patentschrift:
01.08.90

(21) Anmeldenummer: 88101041.7

(22) Anmeldetag: 25.01.88

(51) Int. Cl.⁵: **C08J 3/21**
// C08J3/28, C09J201/00

(54) Verfahren zum Aushärten von UV-härtenden Materialien.

(30) Priorität: 12.02.87 DE 3704416

(43) Veröffentlichungstag der Anmeldung:
24.08.88 Patentblatt 88/34

(45) Bekanntmachung des Hinweises auf die Patenterteilung:
01.08.90 Patentblatt 90/31

(84) Benannte Vertragsstaaten:
AT BE CH DE FR GB IT LI NL SE

(56) Entgegenhaltungen:
EP-A- 0 114 345
EP-A- 0 197 423
EP-A- 0 206 545
CH-A- 555 747
DE-A- 2 620 173
DE-A- 3 339 754

PATENT ABSTRACTS OF JAPAN, Band 8,
Nr. 163 (P-290)[1600], 27. Juli 1984; & JP-A-59 58 401

(73) Patentinhaber: Siemens Aktiengesellschaft,
Wittelsbacherplatz 2, D-8000 München 2(DE)

(72) Erfinder: Kayed, Jalal, Dr. Dipl.-Chem.,
Heinrich-Marschner-Strasse 85,
D-8011 Vaterstetten(DE)
Erfinder: Koch, Volker-Ekkehart, Dr. Dipl.-Phys.,
Jägerstrasse 47, D-8024 Deisenhofen(DE)

## Beschreibung

Die Erfindung betrifft ein Verfahren zum Aushärten von UV-härtenden Materialien, insbesondere von Klebern und Lacken, durch die Bestrahlung mit UV-Licht.

UV-härtende Kleber und Lacke werden bei der Fertigung von optischen Komponenten und in der Leiterplattentechnik, hier speziell Leitkleber und Leitlacke, eingesetzt. Diese Materialien härten unter intensiver und gleichmäßiger Bestrahlung mit UV-Licht sehr rasch aus, z.B. in weniger als 60 sec., weisen jedoch stets einen Volumenschwund auf, der in den Grenzen von ca. 2,5 Vol.-% bis zu 10 Vol.-% liegt. Einerseits soll eine gute Haftfestigkeit erzeugt werden, wobei jedoch ein Schrumpfen der Klebe- oder Lackschicht, verbunden mit Riß- oder Blasenbildung, mit Deplazierung oder Verwerfung oder sogar mit Bruch des Bauteiles, unerwünscht ist und vermieden werden sollte. Dies erfordert eine hohe Bearbeitungssorgfalt. Falls das Bauteil den während des Aushärtens in der Klebe- oder Lackschicht auftretenden Spannungen standhält, lassen sich eventuelle Risse, die das optische Aussehen der Teile verschlechtern bzw. die Leitfähigkeit herabsetzen, durch Zugabe neuer Substanz reparieren. Ein Verfahren, den Volumenschwund und die entsprechenden Spannungen gänzlich zu vermeiden, ist bisher nicht bekannt.

In der heutigen Belichtungstechnik wird stets mit hohen UV-Intensitäten auf großen Flächen gearbeitet. Der Mechanismus des Aushärtens ist bei dieser gleichmäßigen und gleichzeitigen Bestrahlung der gesamten Fläche des UV-härtenden Materials jedoch zufällig und unkontrolliert. Die fotochemische Reaktion startet an vielen Stellen der Materialschicht, an sogenannten Reaktionszentren. Von diesen Zentren aus beginnt die Schrumpfung. Dadurch können Inhomogenitäten in der Klebe- oder Lackschicht entstehen, weil noch flüssige Materialanteile durch bereits ausgehärtete Schichten getrennt werden und somit kein Ausgleich des Volumenschwundes durch Ansaugen von flüssigem Material aus der Umgebung stattfinden kann. Dies führt nach dem Aushärten und Schrumpfen des flüssigen eingeschlossenen Materials zu unterschiedlichen Belastungen in der Klebe- oder Lackschicht und zu den obengenannten Fehlern.

Der Erfindung liegt die Aufgabe zugrunde, die vorgenannten Nachteile zu beseitigen.

Diese Aufgabe wird erfindungsgemäß dadurch gelöst, daß die Bestrahlung des UV-härtenden Materials durch eine Blende derart gesteuert wird, daß
- die Bestrahlung mit UV-Licht an mindestens einem Punkt beginnt und die bestrahlte Fläche konzentrisch von diesem Punkt nach außen hin vergrößert wird oder
- die Bestrahlung mit UV-Licht an mindestens einer Linie beginnt und die gesamte Fläche des UV-härtenden Materials, durch eine relative Verschiebung zwischen Material und Blende in mindestens einer Richtung, bestrahlt wird.

Das Verfahren wird folglich so gestaltet, daß, ausgehend von mindestens einem vorbestimmten Punkt oder mindestens einer vorbestimmten Linie, entsprechend dem Reaktionszentrum oder der Reaktionslinie, die fotochemische Reaktion durch die Bewegung einer Front von UV-Licht in Richtung dieser Front weiterläuft. Das bei der Aushärtung schrumpfende Material kann aus seiner noch nicht ausgehärteten Umgebung oder aus einem Reservoir flüssiges Material nachziehen. Hierdurch wird das Schrumpfen der Klebung oder der Lackschicht weitestgehend vermieden, da es bei dieser Verfahrensweise nicht zu Einschlüssen von noch flüssigem Material kommt.

Eine bewegbare Front von UV-Licht wird durch eine veränderliche oder bewegbare Blende erzeugt, deren Material für UV-Licht undurchlässig ist.

Die erstgenannte Verfahrensweise im Anspruch 1, die von einer punktförmigen Bestrahlung ausgeht, erzeugt eine kreisförmige Front von UV-Licht, die sich von dem Punkt als Reaktionszentrum in Form von kontinuierlich oder in kleinen Stufen sich vergrößernden Kreisen konzentrisch nach außen ausbreitet.

Eine bevorzugte Ausgestaltung dieser Erfindung ist durch den Einsatz einer Lochblende mit veränderlichem Durchmesser gegeben. Das Verfahren sieht vor, mit einer kleinen Blendenöffnung zu beginnen, wobei auf dem UV-härtenden Material nur eine punktförmige Bestrahlung erzeugt wird, und anschließend die Lochblende mit definierter Geschwindigkeit zu öffnen, bis die gesamte Fläche des UV-härtenden Materials von UV-Licht bestrahlt wird.

Die zweitgenannte Verfahrensweise im Anspruch 1 entspricht der gleichen erfinderischen Idee wie die erstgenannte. Sie geht davon aus, daß die fotochemische Reaktion an einer Linie beginnt, wobei hier die Front des UV-Lichtes durch Verschiebung eines Spaltes oder einer partiellen Abdeckung relativ zu der Fläche des UV-härtenden Materiales fortschreitet.

Eine äußerst vorteilhafte Ausgestaltung der Erfindung wird durch den Einsatz eines bewegbaren Spaltes realisiert, der relativ zum UV-härtenden Material bewegt wird. Das derart durchgeführte Verfahren sorgt dafür, daß eine bestimmte Stelle oder Linie des UV-härtenden Materials durch Überfahren der in Bewegungsrichtung vorderen Grenze des Spaltes belichtet wird, eine Zeitlang belichtet bleibt und die Belichtung nach Überfahren der in Bewegungsrichtung hinteren Grenze des Spaltes beendet wird.

Genauso kann als Spalt auch eine partielle Abdeckung verwendet werden, die zu Anfang der Belichtung nur einen schmalen Streifen des UV-härtenden Materiales zur Belichtung freigibt und im Anschluß daran seitwärts heruntergezogen wird, bis die gesamte Fläche des UV-härtenden Materiales belichtet ist.

Das definierte Fortschreiten einer Front von UV-Licht hat jeweils eine entgegengesetzte Strömung der noch flüssigen Substanz zur Folge und führt somit zu einem Ausgleich für den sonst auftretenden Volumenschwund. Der Volumenschwund kann entweder vollständig ausgeglichen werden oder, falls dieser nur geringfügiges Ausmaß hat, von Anfang an mit berücksichtigt werden, so daß gewünschte Schichtdicken fehlerfrei einstellbar sind.

Eine weitere besonders vorteilhafte Ausgestaltung der Erfindung sieht vor, daß die gegenseitige Verschiebung zwischen bewegbarem Spalt und UV-härtendem Material mit konstanter Geschwindigkeit abläuft. Dies führt dazu, daß alle Stellen des UV-härtenden Materials dieselbe Belichtungszeit haben und somit besonders gleichmäßig aushärten.

Die beiden Ausführungsbeispiele zeigen in stark vereinfachter schematischer Darstellung:

Fig. 1 Belichtung einer Fläche von UV-härtendem Material 3 mittels einer Lochblende 2 mit veränderlichem Durchmesser,

Fig. 2 Belichtung einer Fläche von UV-härtendem Material mittels eines relativ dazu bewegbaren Spaltes 41.

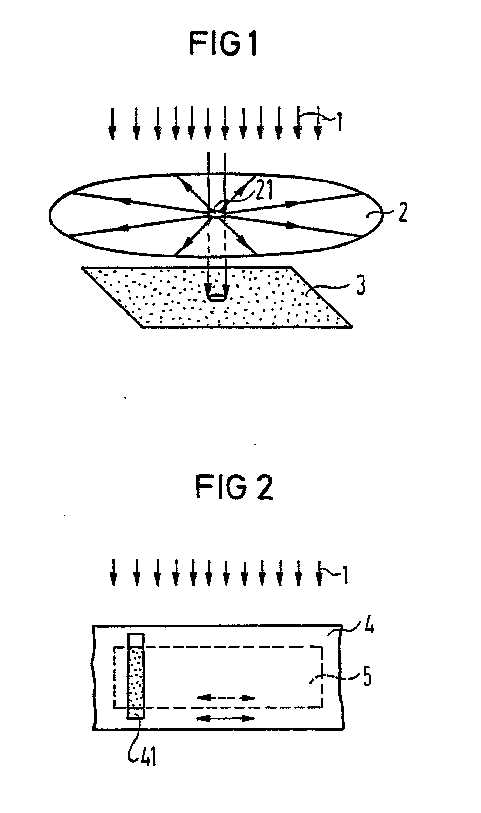

In Fig. 1 wird ersichtlich, daß eine Fläche mit UV-härtendem Material 3 durch UV-Licht 1, gesteuert durch eine Lochblende 2, z.B. eine Irisblende, zu belichten ist. Die anfänglich kleine Öffnung der Blende 21 führt zu einer entsprechend kleinen punkt- oder kreisförmigen Belichtung des UV-härtenden Materials, so daß ein Reaktionszentrum entsteht. Die innerhalb der Lochblende 2 angedeuteten Pfeile weisen daraufhin, daß die Blende während des Verfahrens langsam geöffnet wird, bis die gesamte Fläche des UV-härtenden Materials 3 ausreichend belichtet ist. Bei dieser Verfahrensweise wird keine einheitliche Belichtungszeit für die verschiedenen Stellen des UV-härtenden Materials erzielt. Das wesentliche, nämlich den Volumenschwund des Materiales zu vermeiden, wird durch die von Innen nach Außen konzentrisch fortschreitende kreisförmige Front des UV-Lichtes auf dem UV-härtenden Material bewirkt. Diese definierte Bewegung der Front des UV-Lichtes erzeugt eine entgegengesetzte Strömung von noch flüssiger Substanz, die in diesem Fall radial nach innen auf das Reaktionszentrum gerichtet ist und somit den beim Aushärten auftretenden Volumenschwund ausgleicht.

In Fig. 2 ist eine Fläche von UV-härtendem Material 5 dargestellt, die vom UV-Licht 1 zu belichten ist. Die Blende 4 ist in diesem Fall als Spalt 41 ausgebildet. Durch gegenseitiges Verschieben von Blende, in diesem Fall dem Spalt 41, und der Fläche des zu belichtenden Materials 5, angedeutet durch die eingetragenen Pfeile, beginnt die Belichtung des UV-härtenden Materials auf einer vorbestimmten Seite an einer Linie und sorgt bei konstanter Geschwindigkeit für eine einheitliche Belichtungszeit aller Punkte des UV-härtenden Materials. Eine einfache Realisierung dieser Version des Verfahrens ist gegeben durch eine feststehende UV-Lichtquelle, eine darunterliegende Blende in Form eines stationären Spaltes und einem darunterliegenden Förderband, auf welchem die Bauteile mit den UV-härtenden Schichten mit konstanter Geschwindigkeit transportiert werden.

Für beide genannten Fälle gilt, daß die Geschwindigkeit, mit der sich die Blende 2 öffnet oder mit der sich der Spalt 41 relativ zur Fläche des UV-härtenden Materiales 5 bewegt, und z.B. Spaltöffnungsbreite oder Intensität des UV-Lichtes 1 in Abhängigkeit von den Materialeigenschaften des UV-härtenden Klebers oder Lackes eingestellt werden.

## Patentansprüche

1. Verfahren zum Aushärten von UV-härtenden Materialien (3;5) durch Bestrahlung mit UV-Licht (1), insbesondere von Klebern und Lacken, dadurch gekennzeichnet, daß die Bestrahlung des Materials (3;5) durch eine Blende (2;4) derart gesteuert wird, daß
- die Bestrahlung an mindestens einem Punkt beginnt und die bestrahlte Fläche konzentrisch von diesem Punkt nach außen hin vergrößert wird oder
- die Bestrahlung an mindestens einer Linie beginnt und die gesamte Fläche des UV-härtenden Materials (5), durch eine relative Verschiebung zwischen Material und Blende (4) in mindestens einer Richtung, bestrahlt wird.

2. Verfahren nach Anspruch 1, dadurch gekennzeichnet, daß eine Lochblende (2) mit veränderlichem Durchmesser verwendet wird.

3. Verfahren nach Anspruch 1, dadurch gekennzeichnet, daß als Blende ein relativ zum UV-härtenden Material bewegbarer Spalt (41) verwendet wird.

4. Verfahren nach Anspruch 3, dadurch gekennzeichnet, daß die Relativbewegung zwischen UV-härtendem Material (5) und bewegbarem Spalt (41) mit konstanter Geschwindigkeit abläuft.

## Claims

1. Method of curing UV-curable materials (3; 5) by irradiation with UV light (1), in particular adhesives and varnishes, characterized in that the irradiation of the material (3; 5) is controlled by a diaphragm (2; 4) in such a way that
– the irradiation begins at at least one point and the irradiated surface enlarges outwards concentrically from this point or
– the irradiation begins at at least one line and the entire surface of the UV-curable material (5) is irradiated by a relative displacement between material and diaphragm (4) in at least one direction.

2. Method according to claim 1, characterized in that a pin-hole diaphragm (2) of variable diameter is used.

3. Method according to claim 1, characterised in that a gap (41) moveable relative to the UV-curable material is used as diaphragm.

4. Method according to claim 3, characterized in that the relative movement between UV-curable material (5) and moveable gap (41) takes place at constant speed.

## Revendications

1. Procédé de durcissement de matériaux (3; 5) durcissant sous l'action de la lumière ultraviolette, notamment de colles et de vernis, par exposition à de la lumière ultraviolette (1), caractérisé en ce qu'il consiste, à régler l'exposition du matériau (3; 5) par un diaphragme (2; 4), de façon que:
- l'exposition commence en au moins un point et que la surface exposée est agrandie concentriquement vers l'extérieur, à partir de ce point, ou
- l'exposition commence au niveau d'au moins une ligne et que toute la surface du matériau durcissant sous l'action de la lumière ultraviolette (5) est exposée par un déplacement relatif entre le matériau et le diaphragme (4) dans au moins une direction.

2. Procédé suivant la revendication 1, caractérisé en ce qu'il consiste, à utiliser un diaphragme (2) de diamètre variable.

3. Procédé suivant la revendication 1, caractérisé en ce qu'il consiste, à utiliser comme diaphragme une fente (41) susceptible de se déplacer par rapport au matériau durcissable sous l'action de la lumière ultraviolette.

4. Procédé suivant la revendication 3, caractérisé en ce que le mouvement relatif entre le matériau durcissant sous l'effet de la lumière ultraviolette (5) et la fente mobile (41) s'effectue à une vitesse constante.

# FIG 1

# FIG 2